# FASCICULE DE BREVET EUROPEEN

(11) **EP 0 671 590 B1**
(45) Date de publication et mention de la délivrance du brevet: **05.11.1997**
(21) Numéro de dépôt: 95400497.4
(22) Date de dépôt: 08.03.1995
(51) Int. Cl.: F23R 3/32, F23R 3/12, F23R 3/28

(54) **Système d'injection à prémélange**
Vormischung für ein Einspritzsystem
Premixing injection system

(30) Priorité: 10.03.1994 FR 9402750
(43) Date de publication de la demande: 13.09.1995
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Ansart, Denis Roger Henri, F-77590 Bois Le Roi (FR); Commaret, Patrice André, F-77950 Maincy (FR); David, Etienne Simon René, F-77590 Bois le Roi (FR); Desaulty, Michel André Albert, F-77240 Vert St. Denis (FR); Quinquenneau, Bruno Michel Marc, F-91300 Massy (FR); Sandelis, Denis, F-77370 Nangis (FR)

(56) Documents cités:
- EP-A- 0 445 652
- CH-A- 593 457
- DE-A- 2 415 036
- DE-B- 1 029 195
- FR-A- 2 116 363
- FR-A- 2 415 203
- US-A- 3 927 958

## Description

La présente invention concerne un système d'injection à prémélange destiné à fournir un mélange d'air et de carburant dans la zone de combustion d'une chambre de combustion d'un turboréacteur, ledit système d'injection comportant une zone de prémélange délimitée par un tube de prémélange, des moyens pour envoyer le carburant dans la zone de prémélange et des moyens pour introduire de l'air comprimé dans ladite zone de prémélange afin de disperser le carburant en fines gouttelettes et de créer un écoulement axial tourbillonnaire à la sortie de la zone de prémélange.

La tendance actuelle est d'équiper les turboréacteurs d'aviation de chambres de combustion à deux têtes ou modules: une tête pour le régime de ralenti et une autre tête pour le régime de décollage ou de plein-gaz. Ces deux têtes sont radialement distantes, mais la tête de décollage peut être placée à l'intérieur par rapport à l'axe du moteur ou inversement à l'extérieur. Dans ce type de chambre de combustion à deux têtes, la tête de décollage est équipée en général d'un système d'injection à prémélange qui comporte un injecteur aéromécanique accompagné de vrilles d'air axiales ou radiales et disposé à l'extrémité amont du tube de prémélange.

Le tube peut être de forme convergente ou divergente.

Dans le cas d'un tube convergent, destiné à accélérer uniformément l'écoulement afin de s'assurer une marge vis-à-vis du phénomène de retour de flamme, la stabilisation de la flamme ne peut se réaliser que dans les coins du fond de chambre. Au contraire, lorsque le tube est divergent, on voit apparaître une zone de recirculation centrale. Dans le cas du tube convergent, compte tenu des vitesses élevées et des richesses faibles, le rapport d'équivalence étant voisin de 0.6, les zones de recirculation dans les coins du fond de chambre et les richesses locales espérées ne permettent pas de satisfaire aisément les performances de stabilité de la combustion.

EP-A-0 441 542 montre un brûleur à deux étages dans lequel il est prévu un venturi entre une chambre de prémélange annulaire et la zone de combustion. Ce brûleur est adapté pour le gaz naturel ou des vapeurs d'hydrocarbures.

FR-A-2 116 363 montre également un venturi disposé entre l'injecteur de carburant et la zone de combustion. Ici, le venturi entoure le jet conique de carburant. La partie convergente du venturi permet l'accélération de l'air du mélange autour de l'injecteur. Le divergent est tangentiel au cône de carburant. Il ne se produit pas dans ce dispositif un prémélange en amont du col du venturi. Le but de ce venturi est de faire en sorte qu'au niveau de l'étranglement du venturi, la richesse du mélange soit suffisamment élevée par rapport à la stoechiométrie pour empêcher la combustion qui est en outre rendue impossible par la vitesse d'écoulement du mélange.

Dans des applications à des foyers tubulaires, on connait également par EP-A-0 445 652 une chambre de combustion dans laquelle des cônes divergents de prémélange sont disposés sur le fond de chambre ainsi que perpendiculairement à l'écoulement du flux et par US-A-3 927 958 un autre exemple de dispositif de prévaporisation du carburant.

Le but de la présente invention en adaptant à un foyer annulaire un système d'injection qui permet de stabiliser la combustion dans une zone suffisamment carburée est d'obtenir un refroidissement adéquat de la paroi du système d'injection à prémélange, le tube de prémélange présentant en amont une portion convergente délimitant la zone de prémélange proprement dite et, en aval, une portion divergente qui définit une zone intermédiaire dans laquelle de l'air est injecté par des moyens ménagés dans la paroi de la portion divergente.

Le but est obtenu selon l'invention par le fait que la portion divergente présente une paroi interne et une paroi externe délimitant entre elles une chambre tronconique, la paroi externe étant munie de perçages pour l'entrée d'un air de refroidissement dans ladite chambre tronconique, la paroi interne étant refroidie par impact, un passage d'évacuation de l'air de refroidissement étant prévu à l'extrémité aval de la portion divergente.

Ladite paroi interne peut être pourvue de fentes inclinées par rapport à l'écoulement pour l'introduction de l'air de refroidissement dans la zone intermédiaire.

La portion convergente du tube de prémélange comporte également des perçages inclinés pour le refroidissement par film.

D'autres avantages et caractéristiques de l'invention ressortiront à la lecture de la description suivante faite à titre d'exemple et en référence aux dessins annexés dans lesquels :
La figure 1 montre schématiquement une chambre de combustion à deux têtes, la tête de décollage étant disposée à l'intérieur par rapport à l'axe de la chambre de combustion.
La figure 2 montre schématiquement une chambre de combustion à deux têtes, avec la tête de décollage à l'extérieur.
La figure 3 montre un système de prémélange de l'art antérieur à vrilles radiales et injection aéromécanique.
La figure 4 montre un système de prémélange de l'art antérieur à vrilles axiales et injecteur aéromécanique.
La figure 5 montre la recirculation des gaz dans une chambre de combustion équipée d'un tube de prémélange convergent de l'art antérieur.
La figure 6 montre la recirculation des gaz dans une chambre de combustion équipée d'un tube de prémélange divergent de l'art antérieur.
La figure 7 représente schématiquement le système d'injection à prémélange selon l'invention et la recirculation des gaz dans la zone de combustion de la chambre de combustion.
La figure 8 montre une coupe selon un plan passant par l'axe du tube de prémélange de la portion divergente de ce dernier selon une première variante de réalisation.
La figure 9 est une coupe selon la ligne IX-IX de la figure 8.
La figure 10 est une coupe selon un plan passant par l'axe du tube de prémélange de la portion divergente de ce dernier selon une deuxième variante de réalisation.
La figure 11 est une vue de face de la portion divergente de la figure 10 prise de l'intérieur de la chambre de combustion.
La figure 12 montre en perspective une portion de paroi de la portion divergente des figures 10 et 11.
La figure 13 montre en coupe la portion convergente du tube de prémélange équipée d'un injecteur aérodynamique.
La figure 14 montre une chambre de combustion à deux têtes équipées d'une variante de réalisation du système d'injection à prémélange selon l'invention et,
la figure 15 montre à plus grande échelle et en perspective la disposition d'un orifice de bol.

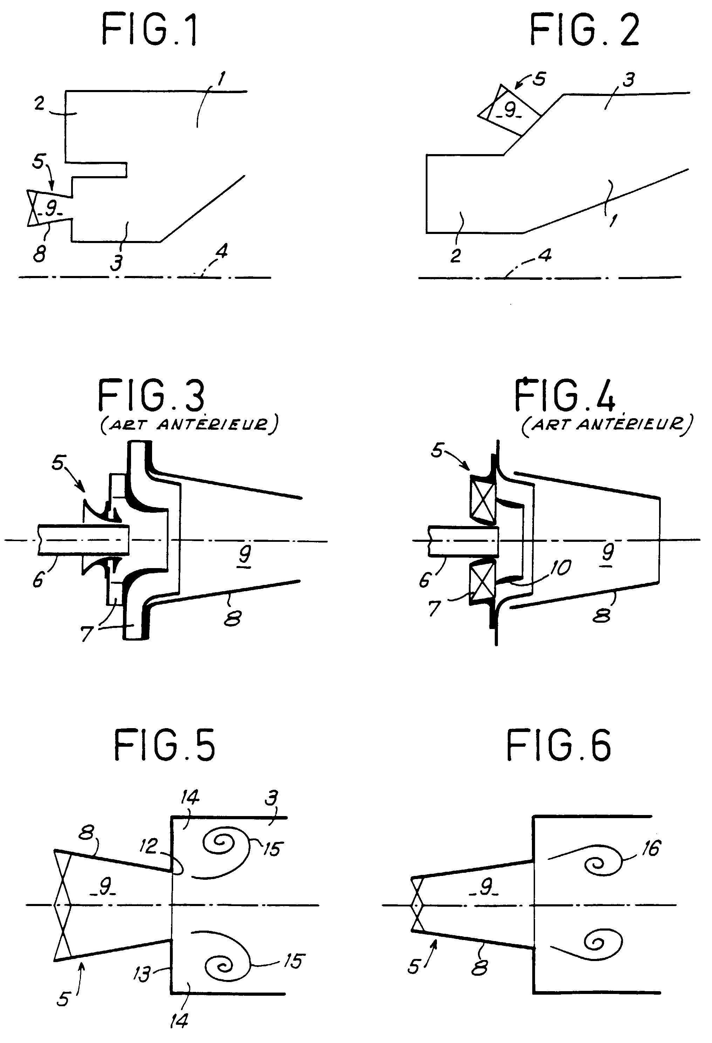

Les figures 1 et 2 montrent une chambre de combustion annulaire 1 d'un turboréacteur qui comporte une tête de ralenti 2 et une tête de décollage 3 espacées radialement par rapport à l'axe géométrique 4 de la chambre de combustion 1. Sur la figure 1, la tête de décollage 3 est située à l'intérieur par rapport à l'axe 4, tandis que sur la figure 2 la tête de décollage 3 est située à l'extérieur.

La tête de décollage 3 est équipée d'un système d'injection à prémélange 5 qui comporte notamment un injecteur 6 de carburant, au moins une vrille 7 d'introduction d'air de vaporisation entourant l'injecteur 6 et un tube de prémélange 8 qui délimite une chambre de prémélange 9.

Les figures 3 et 4 montrent des systèmes d'injection 5 de l'art antérieur munis de tubes 8 de prémélange convergents. Le système d'injection 5 montré sur la figure 3 comporte deux vrilles radiales, tandis que le système d'injection 5 montré sur la figure 4 comporte une vrille axiale dont le flux de sortie est séparé en deux flux par une collerette 10.

Les figures 5 et 6 montrent la disposition des systèmes d'injection à prémélange 5 de l'art antérieur dans le fond de chambre.

Sur la figure 5, le tube 8 de prémélange est du type convergent. Son embouchure de sortie 12 est prévue dans la paroi 13 formant le fond de la chambre de combustion 3. Il se produit dans les coins 14 du fond de chambre des recirculations latérales représentées par la référence 15. Ces zones sont faiblement carburées, ce qui se traduit par une stabilité médiocre de la flamme, en revanche, les risques de retours de flamme sont faibles.

Sur la figure 6, le tube 8 de prémélange est du type divergent. Il se produit ici des recirculations frontales représentées par la référence 16. Ces zones sont fortement carburées ce qui favorise la stabilité de la flamme, mais il y a des risques de retours de flamme.

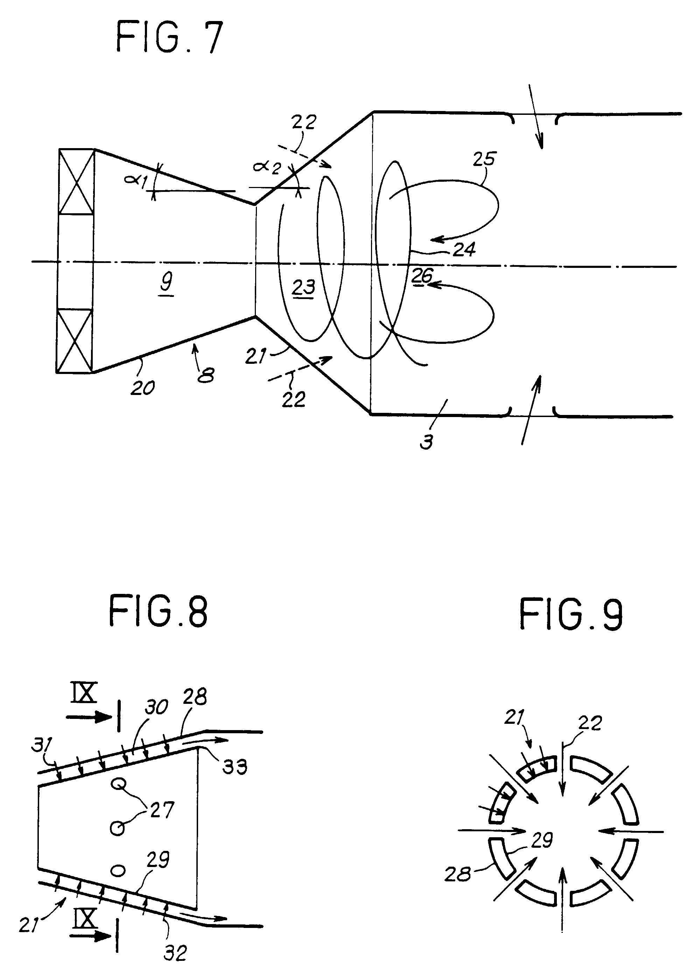

La figure 7 montre de façon schématique le système d'injection 5 selon la présente invention. Le tube de prémélange 8 comporte, en amont, une portion convergente 20 qui délimite la zone 9 de prémélange proprement dite, et en aval une portion divergente 21 qui débouche dans le fond de la chambre de combustion 3. La portion convergente 20 est équipée en amont d'un injecteur 6 de carburant du type aéromécanique ou aérodynamique et d'au moins une vrille 7 d'entrée d'air. L'injecteur 6 et vrille 7 peuvent être conformes à ceux qui sont représentés sur les figures 3 et 4. Les systèmes d'injection conformes à l'invention, adaptés à des foyers annulaires sont dans tous les cas disposés dans l'axe du turboréacteur ou de la tête de chambre.

La portion divergente 21, dont l'angle est déterminé en fonction des conditions en amont (vitesse et turbulence du mélange issu de la zone de prémélange 9), comporte des moyens pour injecter un air supplémentaire, représenté par les flèches répertoriées 22, dans la zone intermédiaire 23 délimitée par ladite portion divergente 21, afin de favoriser la turbulence de l'écoulement issu de la zone de prémélange 9, au cours de sa détente dans ladite zone intermédiaire 23. La référence 24 montre le tourbillon à l'entrée de la chambre de combustion 3 et les flèches 25 la recirculation des gaz dans la chambre de combustion 3.

La portion convergente 20 du tube de prémélange 8 assure le prémélange du carburant et de l'air introduit dans la chambre de prémélange 9 avec le minimum de risques d'autoinflammation et de retours de flamme. La portion divergente 21 favorise la régénération de la turbulence en vue de stabiliser la combustion dans une zone de combustion 26 suffisamment carburée.

Selon une première variante de réalisation montrée sur les figures 8 et 9, les moyens pour injecter l'air complémentaire 22 dans la zone intermédiaire 23 comportent des orifices 27 ménagés dans la portion divergente 21. Cette dernière comporte une paroi extérieure 28 et une paroi intérieure 29 qui délimitent entre elles une chambre tronconique 30. La paroi extérieure 28 comporte une pluralité de perçages 31 par lesquels un air de refroidissement 32 pénètre dans la chambre 30 et refroidit la paroi intérieure 29 par impact. Cet air de refroidissement 32 pénètre dans la chambre de combustion par un passage 33 d'évacuation prévu à l'éxtrémité aval de la portion divergente 21. Les orifices 27 traversent évidemment les deux parois 28 et 29. L'air 22 insufflé par les orifices 27 sert à générer des recirculations en aval et à rompre le profil de vitesse axial de l'écoulement. Ces orifices 27 sont, soit convergents vers l'axe du tube, soit inclinés afin d'assurer la mise en rotation (swirl) du débit d'air injecté dans le but de favoriser la stabilisation de la flamme.

Le mode de refroidissement de la paroi intérieure 29 combine à la fois les effets d'impact, de film de refroidissement et de multiperforation. Les perçages 31 de multiperforation sont inclinés dans deux plans : le premier est situé dans l'axe de l'écoulement principal et le second est perpendiculaire à cet écoulement. Cette multiperforation est du type tangentielle afin de ne pas nuire à l'écoulement tourbillonnant généré par les vrilles amont. Cette protection thermique de paroi est particulièrement efficace lors de modes de fonctionnement dégradés, notamment en cas de remontée de flamme, en cas d'autoinflammation lors d'un pompage au compresseur ou en cas d'ingestion d'oiseau par exemple.

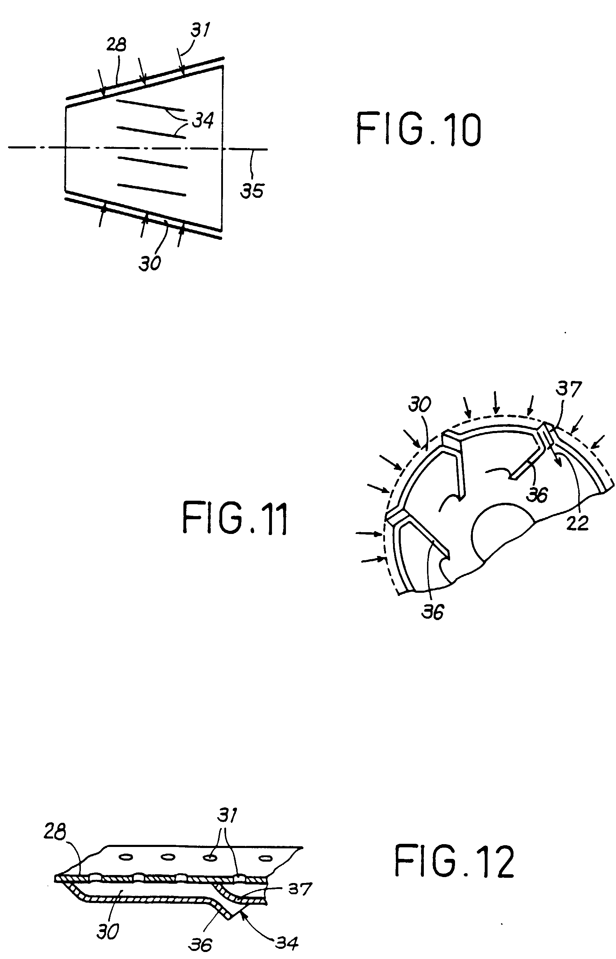

Selon un deuxième mode de réalisation de réalisation représenté sur les figures 10 à 12, la portion convergente 21 présente également une paroi extérieure 28 et une paroi intérieure 29 qui délimitent entre elles une chambre tronconique 30. La paroi extérieure 28 comporte également des perçages 31 par lesquels l'air de refroidissement 32 pénètre dans la chambre 30. La paroi intérieure 29 est munie d'une pluralité de fentes 34 inclinées par rapport à l'axe 35 du tube de prémélange et mettant en communication la chambre tronconique 30 avec la zone intermédiaire 23 pour y insuffler l'air supplémentaire 22. Ces fentes 34 sont délimitées par une lèvre inclinée 36 qui s'étend obliquement dans la zone intermédiaire 23 et par une paroi de raccordement 37 de la paroi intérieure 29 à la paroi extérieure 28. Cette disposition des fentes 34 favorise la turbulence dans la zone intermédiaire 23.

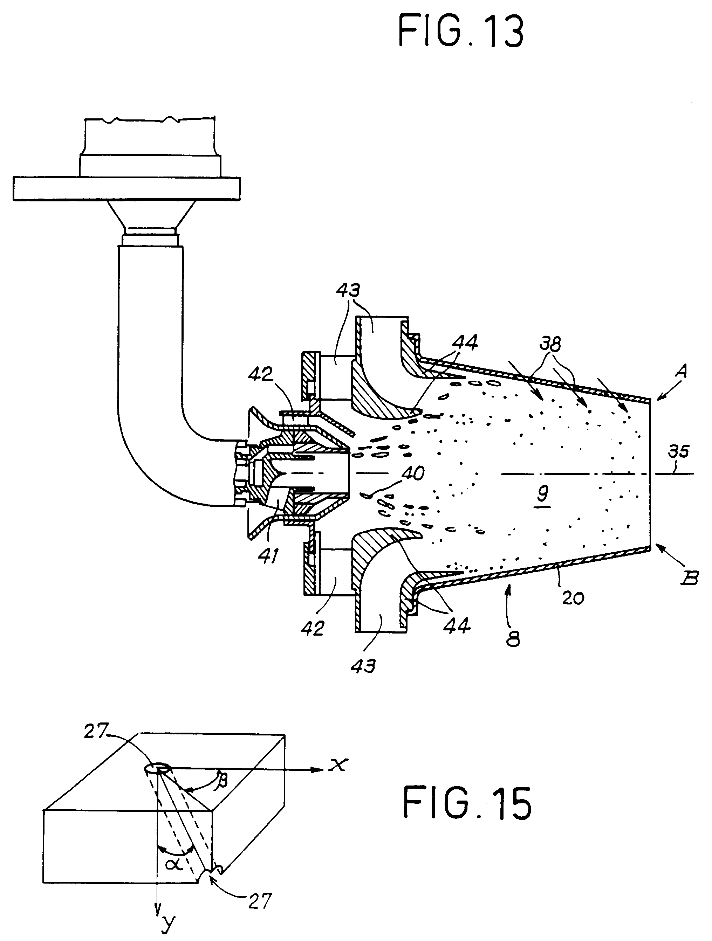

Comme on le voit sur la figure 13, la portion convergente 20 comporte également une pluralité de perforations inclinées 38 qui permettent le refroidissement par film de la zone de prémélange 9.

L'injecteur 6 de carburant montré sur la figure 13 est du type aérodynamique. Le carburant est réparti selon une nappe circulaire homogène 40 autour d'une vrille interne 41. Une première vrille 42 peut être radiale ou axiale. Une pulvérisation primaire de la nappe de carburant 40 est assurée par la vrille interne 41 et la première vrille 42 qui la prennent en sandwich. Au moins une deuxième vrille radiale 43 est interposée entre la première vrille 41 et l'extrémité amont de la portion convergente 20 du tube 8 de prémélange. Les deuxièmes vrilles 43 sont équipées de languettes 44. Lesdites deuxièmes vrilles 43 et lesdites languettes 44 assurent les pulvérisations secondaires du mélange. Les vrilles 42 et 43 peuvent être corotatives ou contrarotatives afin de contrôler le cône de pulvérisation.

Les vrilles 43 et les languettes 44 sont étagées radialement et axialement dans le sens de l'écoulement du mélange autour de la tête de l'injecteur 6.

La figure 13 montre deux versions de tube de prémélange. La version supérieure A est équipée de quatre vrilles 41, 42, 43. La première vrille 42 est axiale et assure la fonction de pulvérisation en association avec la vrille interne 41 de l'injecteur. Les deux deuxièmes vrilles 43 sont radiales et leurs languettes 44 assurent les fonctions de prémélange et de pulvérisation secondaire par film. La version inférieure B est équ ipée de trois vrilles. La première vrille 41 est radiale et assure la fonction de pulvérisation avec la vrille interne 41 de l'injecteur 6.

Afin de conserver et d'entretenir le swirl dans le tube 8 de prémélange jusqu'à la sortie, les parois de la portion convergente 20 sont refroidies par film et multiperforations dont les perçages 38 sont inclinés par rapport à la génératrice du tube 8 et tangentiellement. Cette caractéristique a pour but de favoriser la création d'une zone de recirculation à la sortie du tube 8 de prémélange, ce qui est propice à la stabilisation de la flamme.

On notera que la stabilisation de la flamme en aval du col du système d'injection, telle que schématisée dans la zone 23 de la figure 7 est conditionnée par l'aérodynamique générée par chaque vrille d'air et chaque venturi du système, ainsi que par les caractéristiques du divergent situé en aval du col.

Les vrilles et venturi amont sont tels qu'aucune recirculation n'apparaisse dans le tube de prémélange, mais qu'elle se développe en aval du col. Pour ce faire, on prévoit des vrilles calées à 45 degrés maximum, dont le rapport des vitesses débitantes au col de chaque venturi est inférieur à 0,70.

La détente en aval du col possède les caractéristiques suivantes :
- élargissement brusque ou divergent
- l'injection d'air à ce niveau est réalisée de manière à, soit favoriser la recirculation grâce à l'introduction d'air tourbillonnant suivant la figure 11 ou par implantation d'une troisième vrille d'air en aval du col, soit assurer un blocage aérodynamique par les trous de bol, permettant d'une part de contrôler la carburation par répartition du carburant vaporisé et du liquide restant et de provoquer localement des "mini" zones de recirculation derrière les jets suivant la figure 8.

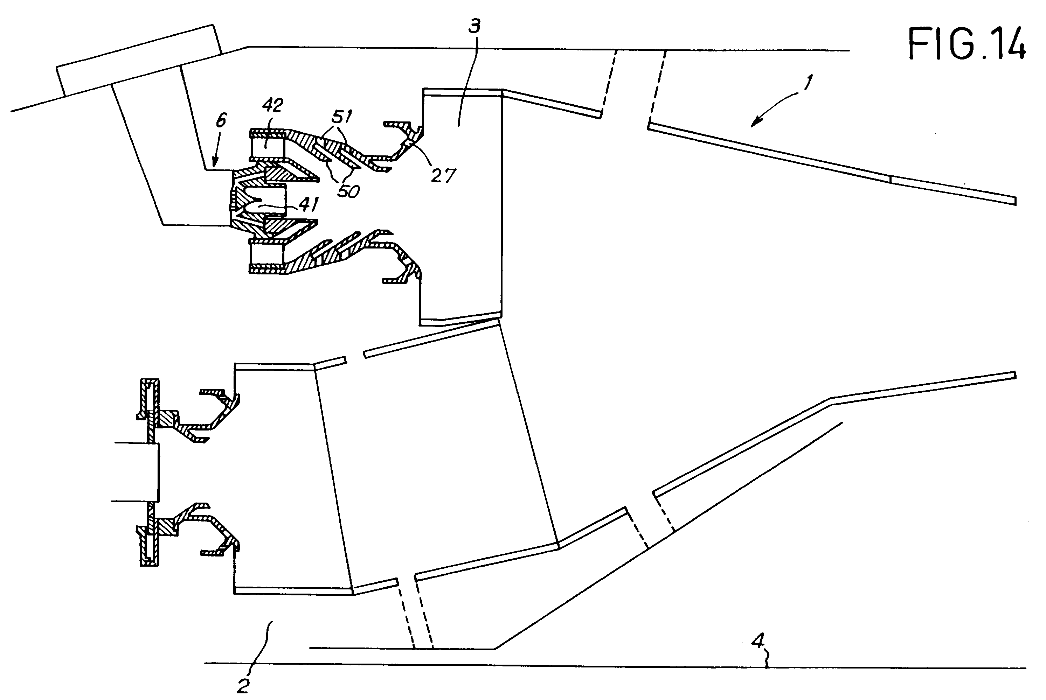

La figure 14 montre une chambre de combustion 1 à deux têtes, dans laquelle la tête 3 de décollage est équipée d'un système 5 d'injection à prémélange qui comporte un injecteur 6 aérodynamique et une première vrille 42 axiale. La portion 20 convergente du tube de prémélange comporte des collerettes 50 qui s'étendent vers l'axe 35 et axialement dans le sens de l'écoulement du mélange. Des orifices 51 sont ménagés dans la paroi de la portion 20 convergente en regard des collerettes 50. La portion divergente 21 est constituée d'un bol classique, qui présente des orifices de bol 27 inclinés et tangentiels. Le débit d'air issu des orifices de bol 27 a la particularité d'avoir une composante de vitesse dirigée vers l'axe du tube et une composante de vitesse tangentielle qui engendre un swirl corotatif au tourbillon créé par la vrille axiale 42. Cette particularité des trous de bol 27 permet d'avoir une meilleure recirculation du système d'injection.

La figure 15 montre la disposition d'un orifice de bol 27 par rapport à une génératrice du bol définie par l'axe X et la normale à ce bol définie par l'axe Y. L'angle α définit la composante normale de vitesse du débit d'air et l'angle β en définit la composante tangentielle.

Cette technologie peut être également réalisée avec des systèmes d'injection aéromécaniques équipés de vrilles radiales ou axiales.

Les angles α et β sont définis en fonction des vecteurs "vitesse" du mélange air-carburant au voisinage de la paroi du bol. Les angles des orifices de bol 27 sont variables en fonction de l'emplacement desdits orifices 27 afin que l'air frais soit injecté co-courant avec le mélange circulant auprès de la paroi. Cette solution favorise l'efficacité du refroidissement tout en limitant le débit d'air associé.

Les vrilles 42 et 43, radiales ou axiales, décrites ci-dessus peuvent être diaphragmées simultanément ou séparément pour permettre le réglage et l'étagement du débit d'air afin de maintenir les richesses locales compatibles avec les performances propres aux systèmes d'injection équipant la chambre de combustion. Un exemple de diaphragme est donné dans le brevet Snecma FR 2 572 463.

## Revendications

1. Système d'injection à prémélange destiné à fournir un mélange d'air et de carburant dans la zone de combustion (26) d'une chambre de combustion (3) d'un turboréacteur, ledit système d'injection (5) comportant une zone de prémélange (9) délimitée par un tube de prémélange (8), des moyens (6) pour envoyer le carburant dans la zone de prémélange (9) et des moyens (7) pour introduire de l'air comprimé dans ladite zone de prémélange (9) afin de disperser le carburant en fines gouttelettes et de créer un écoulement axial tourbillonnaire à la sortie de la zone de prémélange (9), ledit tube de prémélange (8) présentant en amont, une portion convergente (20) délimitant la zone de prémélange (9) proprement dite, et en aval, une portion divergente (21) qui définit une zone intermédiaire (23) dans laquelle de l'air (22) est injecté par des moyens ménagés dans la paroi de la portion divergente (21) afin de favoriser la turbulence (9) de l'écoulement issu de la zone de prémélange (9) au cours de sa détente dans ladite zone intermédiaire (23), caractérisé en ce que la portion divergente (21) présente une paroi interne (29) et une paroi externe (28) délimitant entre elles une chambre tronconique (30), la paroi externe (28) étant munie de perçages (31) pour l'entrée d'un air de refroidissement (32) dans ladite chambre tronconique (30), la paroi interne (29) étant refroidie par impact, un passage d'évacuation (33) de l'air de refroidissement étant prévu à l'extrémité aval de la portion divergente (21).

2. Système d'injection selon la revendication 1, caractérisé en ce que la portion divergente (21) présente une paroi interne (29) et une paroi externe (28) délimitant entre elles une chambre tronconique (30), la paroi externe (28) étant munie de perçages (31) pour l'entrée d'un air de refroidissement dans ladite chambre tronconique (30), la paroi interne (29) étant refroidie par impact et étant pourvue de fentes (34) inclinées par rapport à l'écoulement pour l'introduction de l'air de refroidissement dans la zone intermédiaire (23).

3. Système d'injection selon l'une quelconque des revendications 1 à 2 caractérisé en ce que les moyens pour envoyer le carburant dans la zone de prémélange (9) comporte un injecteur aéromécanique (6) et en ce que les moyens pour introduire de l'air comprimé dans la zone de prémélange comportent au moins une vrille (7) d'air disposée autour de l'injecteur aéromécanique.

4. Système d'injection selon l'une quelconque des revendications 1 à 2, caractérisé en ce que les moyens pour envoyer le carburant dans la zone de prémélange (9) comportent un injecteur aérodynamique et en ce que les moyens pour introduire de l'air comprimé dans la zone de prémélange (9) comportent une vrille interne (41) équipant l'injecteur, une première vrille (42) d'air disposée autour de l'injecteur (6) aérodynamique et assurant la fonction de pulvérisation en association avec la vrille interne (41), et au moins une deuxième vrille (43) interposée entre la première vrille et la portion convergente et destinée à assurer le prémélange et la pulvérisation secondaire par film.

5. Système d'injection selon l'une quelconque des revendications 1 à 4, caractérisé en ce que la portion convergente du tube de prémélange comporte des perçages inclinés et tangentiels pour le refroidissement par film.

## Patentansprüche

1. Einspritzsystem mit Vormischung zur Zuführung eines Luft-Kraftstoff-Gemischs in die Verbrennungszone (26) einer Brennkammer (3) eines Turboluftstrahltriebwerks,
wobei das Einspritzsystem (5) aufweist:
eine Vormischzone (9), die von einem Vormischrohr (8) begrenzt ist,
Mittel (6) zum Einleiten des Kraftstoffs in die Vormischzone (9) und
Mittel (7) zum Einführen von komprimierter Luft in die Vormischzone (9), um den Kraftstoff in feine Tröpfchen zu versprühen und am Ausgang der Vormischzone (9) eine axiale Wirbelströmung zu erzeugen,
wobei das Vormischrohr (8) auf der stromaufwärtigen Seite einen konvergierenden Abschnitt (20) aufweist, der die eigentliche Vormischzone (9) begrenzt, und auf der stromabwärtigen Seite einen divergierenden Abschnitt (21), der eine Zwischenzone (23) bestimmt, in die durch in der Wandung des divergierenden Abschnitts (21) vorgesehene Mittel Luft (22) eingespritzt wird, um die Turbulenz (9) der aus der Vormischzone (9) austretenden Strömung im Verlauf ihrer Entspannung in der genannten Zwischenzone (23) zu begünstigen,
**dadurch gekennzeichnet**,
daß der divergierende Abschnitt (21) eine Innenwand (29) und eine Außenwand (28) besitzt, die zwischen sich eine kegelstumpfförmige Kammer (30) begrenzen, wobei
die Außenwand (28) mit Durchbrüchen (31) für den Eintritt von Kühlluft (32) in die kegelstumpfförmige Kammer (30) ausgestattet ist,
die Innenwand (29) durch Aufprall gekühlt wird und
in dem stromabwärtigen Endbereich des divergierenden Abschnitts (21) ein Durchgang (33) zum Evakuieren der Kühlluft vorgesehen ist.

2. Einspritzsystem nach Anspruch 1, dadurch gekennzeichnet, daß der divergierende Abschnitt (21) eine Innenwand (29) und eine Außenwand (28) besitzt, die zwischen sich eine kegelstumpfförmige Kammer (30) begrenzen, wobei die Außenwand (28) mit Durchbrüchen (31) für den Eintritt von Kühlluft (32) in die kegelstumpfförmige Kammer (30) ausgestattet ist, die Innenwand (29) durch Aufprall gekühlt wird und mit relativ zu der Strömung geneigten Schlitzen (34) zum Einführen der Kühlluft in die Zwischenzone (23) versehen ist

3. Einspritzsystem nach einem der Ansprüche 1 bis 2, dadurch gekennzeichnet, daß die Mittel zum Einleiten des Kraftstoffs in die Vormischzone (9) eine aeromechanische Einspritzdüse (6) umfassen und daß die Mittel zum Einführen der komprimierten Luft in die Vormischzone wenigstens einen Luftverwirbler (7) umfassen, der um die aeromechanische Einspritzdüse (6) angeordnet ist.

4. Einspritzsystem nach einem der Ansprüche 1 bis 2, dadurch gekennzeichnet, daß die Mittel zum Einleiten des Kraftstoffs in die Vormischzone (9) eine aerodynamische Einspritzdüse (6) umfassen und daß die Mittel zum Einführen der komprimierten Luft in die Vormischzone wenigstens einen internen Verwirbler (41), mit dem die Einspritzdüse ausgestattet ist, einen ersten Luftverwirbler (42), der um die aerodynamische Einspritzdüse (6) angeordnet ist und in Verbindung mit dem internen Verwirbler (41) die Zerstäubungsfunktion gewährleistet, und wenigstens einen zweiten Verwirbler (43) umfassen, der zwischen dem ersten Verwirbler und dem konvergierenden Abschnitt angeordnet ist und dazu dient, die Vormischung und die sekundäre Zerstäubung durch Filmbildung zu gewährleisten.

5. Einspritzsystem nach einem der Ansprüche 1 bis 4, dadurch gekennzeichnet, daß der konvergierende Abschnitt des Vormischrohrs geneigte und tangentiale Durchbrüche für die Kühlung durch Filmbildung aufweist.

## Claims

1. Injection system with premixing intended to supply an air and fuel mixture to the combustion region (26) of a combustion chamber (3) of a turbojet engine, the said injection system (5) comprising a premixing region (9) delimited by a premixing tube (8), means (6) for sending fuel into the premixing region (9) and means (7) for introducing compressed air into the said premixing region (9) in order to disperse the fuel into fine droplets and create a swirling axial flow at the outlet of the premixing region (9), the said premixing tube (8) having, at the upstream end, a convergent portion (20) delimiting the premixing region (9) proper and, at the downstream end, a divergent portion (21) which defines an intermediate region (23) into which air (22) is injected through means formed in the wall of the divergent portion (21) so as to promote turbulence (9) in the flow leaving the premixing region (9) as it extends in the said intermediate region (23), characterized in that the divergent portion (21) has an internal wall (29) and an external wall (28) which delimit between them a frustoconical chamber (30), the external wall (28) having holes (31) to let cooling air (32) into the said frustoconical chamber (30), the internal wall (29) being cooled by impact, a passage (33) for removing the cooling air being provided at the downstream end of the divergent portion (21).

2. Injection system according to Claim 1, characterized in that the divergent portion (21) has an internal wall (29) and an external wall (28) which delimit between them a frustoconical chamber (30), the external wall (28) having holes (31) for letting a cooling air into the said frustoconical chamber (30), the internal wall (29) being cooled by impact and having slots (34) which are inclined with respect to the flow to allow the cooling air into the intermediate region (23).

3. Injection system according to either one of Claims 1 and 2, characterized in that the means for sending fuel into the premixing region (9) comprises an aeromechanical injector (6) and in that the means for letting compressed air into the premixing region comprise at least one twisted air deflector (7) arranged around the aeromechanical injector.

4. Injection system according to either one of Claims 1 and 2, characterized in that the means for sending fuel into the premixing region (9) comprise an aerodynamic injector and in that the means for letting compressed air into the premixing region (9) comprise an internal twisted deflector (41) with which the injector is equipped, a first twisted air deflector (42) around the aerodynamic injector (6) and performing the function of atomizing in conjunction with the internal twisted deflector (21), and at least one second twisted deflector (43) inserted between the first twisted deflector and the convergent portion and intended to carry out the premixing and secondary atomization by a film effect.

5. Injection system according to any one of Claims 1 to 4, characterized in that the convergent portion of the premixing tube comprises inclined and tangential holes for cooling by film effect.
